# EUROPEAN PATENT APPLICATION

(11) **EP 4 674 315 A1**
(43) Date of publication of application: **07.01.2026**
(21) Application number: 24185725.9
(22) Date of filing: 01.07.2024
(51) Int. Cl.: A47C 3/18, A01M 31/02

(54) **HUNTING CHAIR**

(71) Applicant: Huntos ApS, 6200 Aabenraa (DK)
(72) Inventor: Schulz, Oskar, 6200 Aabenraa (DK)
(74) Representative: Larsen & Birkeholm A/S

(57) **Abstract**

The present invention relates to a hunting chair and more specifically a collapsible hunting chair (1) that a comprises a seat 2, a back rest 3, at least three pivotable mounted legs (4-6) for resting on a generally horizontal surface when unfolded, a turntable (7) between the seat (2) and the legs (4-6) so that, in use of the unfolded hunting chair (1), the seat (2) can rotate around a generally vertical axis in relation to the legs (4-6).

## Description

### Technical field of the invention

The present invention relates to a hunting chair, and more specifically a collapsible hunting chair that comprises a seat, a back rest, at least three pivotable mounted legs for resting on a generally horizontal surface when unfolded, a turntable between the seat and the legs so that, in use of the unfolded hunting chair, the seat can rotate around a generally vertical axis in relation to the legs.

### Background of the Invention

Hunting chairs are widely used by hunters all over the world. They are often used in connection with hunting with a rifle in the type of hunting that is generally known as stand hunting, a very common type of hunting. The hunter waits, often for many hours, in a high seat or other concealed position to observe and shoot the game. This method is quiet and hardly disturbs the natural behavior of the animals. It is particularly suitable for hunting game that is easily spooked by human presence, such as roe deer or stags.

Hunting chairs are designed to provide comfort and stability for hunters during such long periods of waiting. Common types of hunting chairs include folding hunting chairs that are portable and easy to set up, making them ideal for hunters who frequently change locations. They often feature lightweight materials like aluminium and have simple foldable designs for easy transport and storage. Swivel hunting chairs offer 360-degree rotation, allowing hunters to easily scan their surroundings without excessive movement. These chairs are popular in ground blinds or fixed positions where visibility is crucial. Bucket-style hunting chairs come with a bucket seat design, providing added comfort with padded seats and back rests. They are typically more durable and provide better support, making them suitable for extended hunting sessions. Ground hunting chairs are specifically designed for ground blinds, these chairs have a low profile to keep hunters concealed. They often include features like adjustable legs for uneven terrain and are often made from camouflaged materials. Other types of hunting chairs include backpack hunting chairs that combine functionality with convenience as these chairs double as backpacks. They feature storage compartments for gear and can be quickly unfolded into a chair, making them ideal for mobile hunters, and blind chairs that are designed for use within hunting blinds. These chairs prioritize silence and stability. They often have silent swivels and adjustable heights to accommodate different blind setups and hunter preferences.

Hunting chairs are often used together with some type of shooting stick to enhance the stability of the gun when aiming and shooting. Hunting sticks often comprise two or more stick elements for added stability, but more stick elements will reduce the possibility for the hunter to turn and follow moving game.

### Object of the Invention

The object of the present invention is to provide a collapsible hunting chair that is easy to transport, easy to unfold and fold, and which provides a stable and rotatable platform for the hunter and the gun.

### Summary of the Invention

According to the invention the collapsible hunting chair comprises a seat, a back rest, at least three pivotable mounted legs for resting on a generally horizontal surface when unfolded, a turntable between the seat and the legs so that, in use of the unfolded hunting chair, the seat can rotate around a generally vertical axis in relation to the legs, and an adjustable gun rest with two side arms that, when the chair is unfolded and ready to use, is rigidly connected to the seat and can be put in a fixed position in front of a hunter, so as to provide a stable rest for the gun also when the seat is rotated in relation to the legs.

In this way, a hunting chair is provided that is easy to transport and unfold and that gives the hunter a stable base with the possibility of moving the gun and the chair in a generally circular motion with a high degree of stability that is crucial when aiming and shooting.

According to a preferred embodiment, of the collapsible hunting chair the gun rest comprises a central supporting column, the length of which can be adjusted.

This ensures further stability of the gun rest, and the gun rest can be adjusted to fit any hunter's preference.

Preferably, the central supporting column has an end that is pivotably mounted on the gun rest, so as to ensure easy unfolding, folding and adjustment.

The other end of the supporting column is advantageously provided with means for releasable fastening onto the front side of the seat, so that no tools will be necessary when unfolding and folding the chair.

In a preferred embodiment the other end of the supporting column comprises an end piece that is fixed perpendicular to the supporting column. This provides for an easy and quick mounting of the end of the supporting column in the seat.

Preferably, the chair is provided with three legs that each comprise an upper part that is rigidly connected to the seat, a lower part and a pivot. When the pivots are shifted in relation to one another, there is a possibility of folding the legs so that all three legs are placed generally parallel to the seat and on top of each other, and the legs will be crossing each other when folded.

Advantageously, the side arms of the gun rest are provided with pivots and stops that gives the possibility of easy unfolding and folding of the hunting chair.

In the preferred embodiment, the gun rest can be placed in a stable position on the ground when the chair is unfolded. In this way, it is easy for the hunter to sit down in the chair and subsequently raise the gun rest.

If a gun rest for some reason is not needed, the gun rest can be placed in a stable position behind the back rest when the chair is unfolded.

### Brief description of the figures

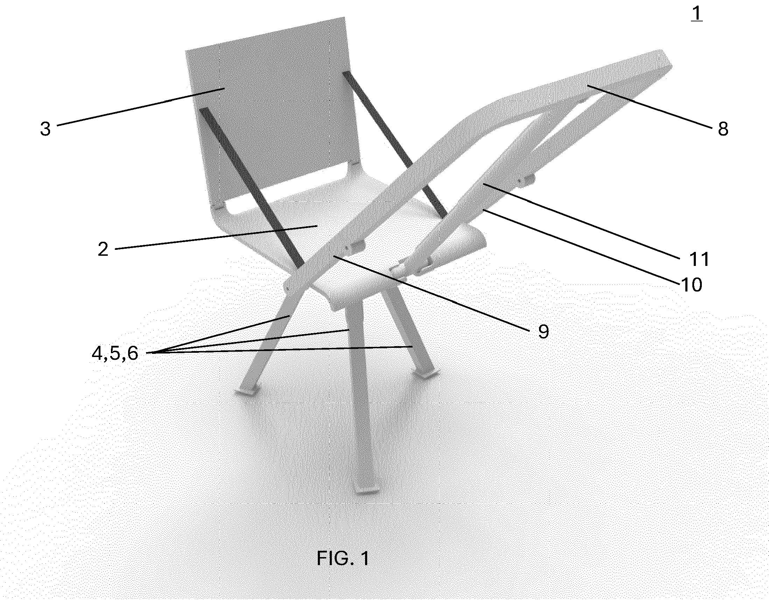

Fig. 1 shows a perspective view of a hunting chair according to the invention in an unfolded and ready to use position,

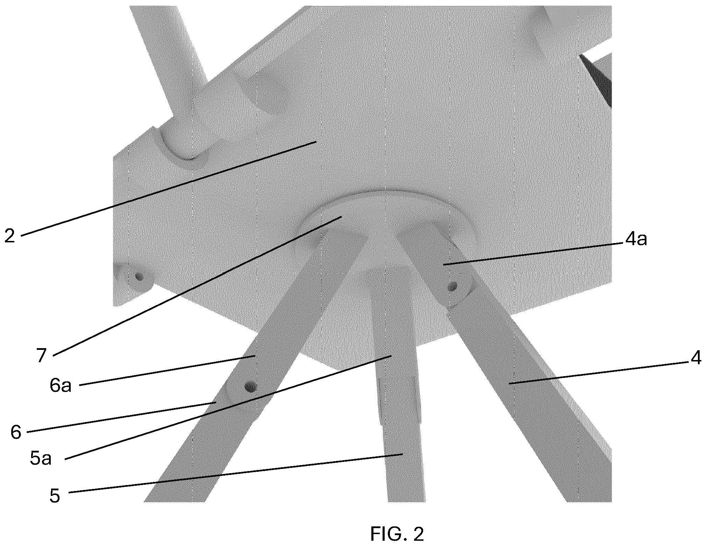

Fig. 2 shows a detail of the hunting chair seen from below,

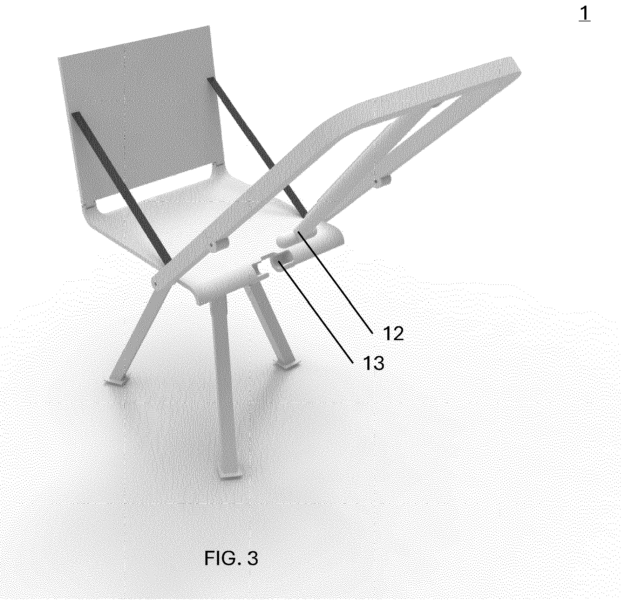

Fig. 3 shows the chair with a central support column of a gun rest in a position obtained just before or after mounting thereof,

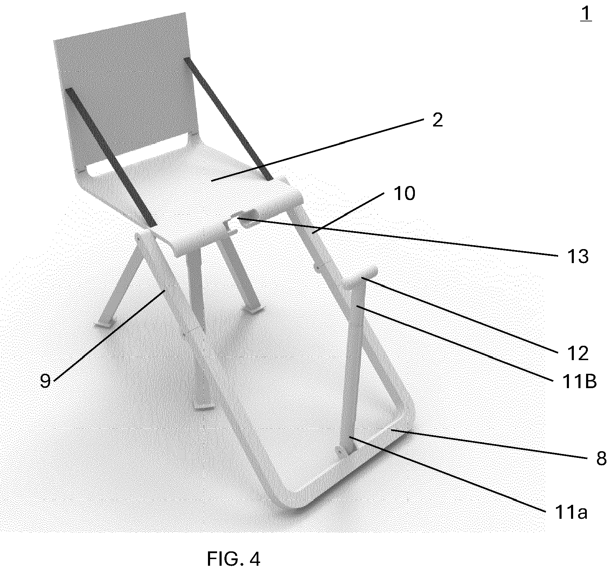

Fig. 4 shows the chair with the gun rest on the ground,

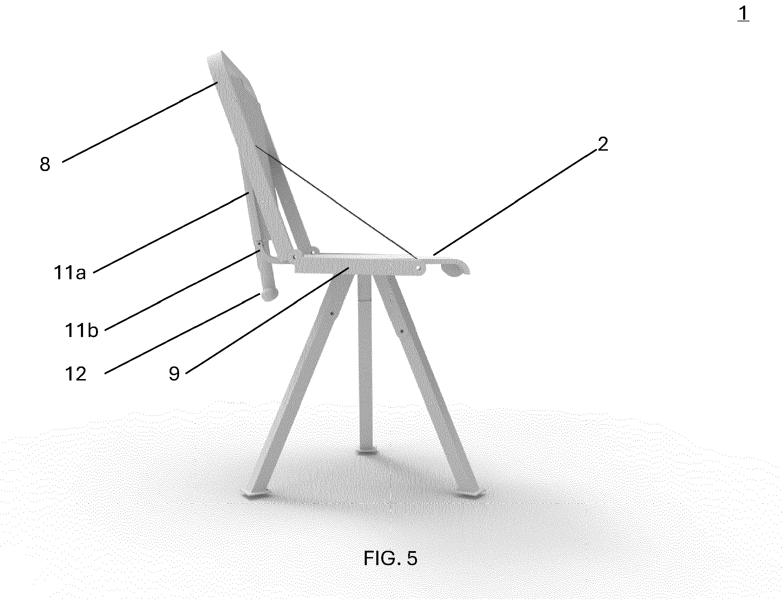

Fig. 5 shows the chair with the gun rest folded behind the back rest in a perspective side view,

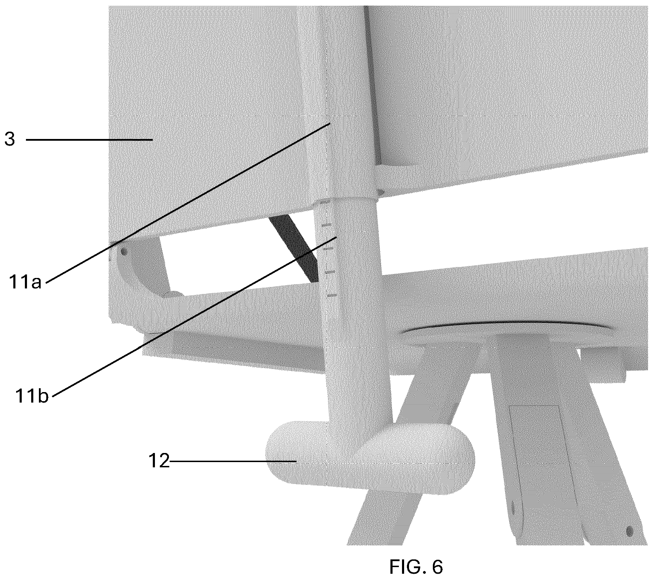

Fig. 6 shows a detail of the support column of the gun rest in the folded position behind the back rest,

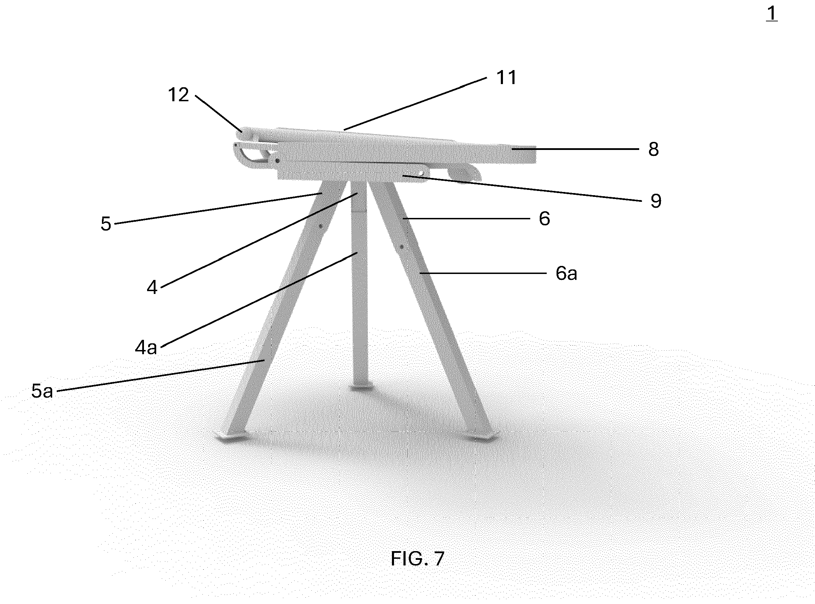

Fig. 7 shows the hunting chair in a side view with the back rest and the gun rest folded on top of the seat,

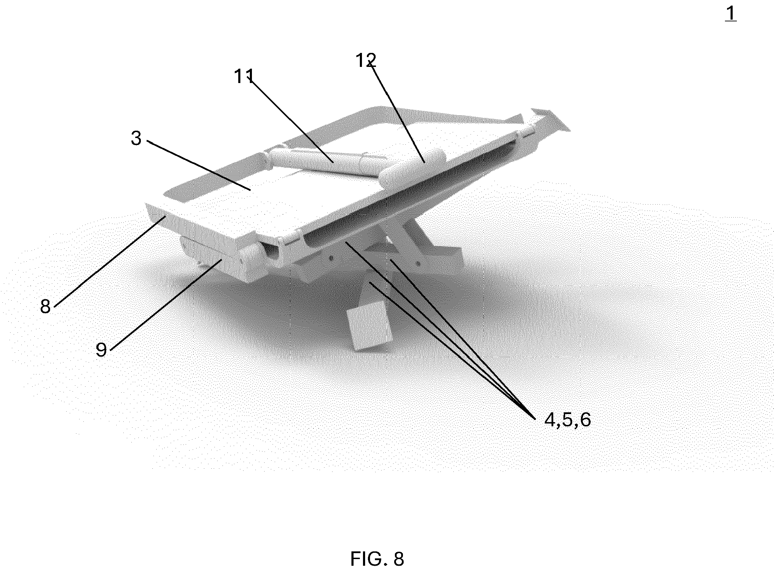

Fig. 8 shows a perspective view of the hunting chair in a completely folded or collapsed position, and

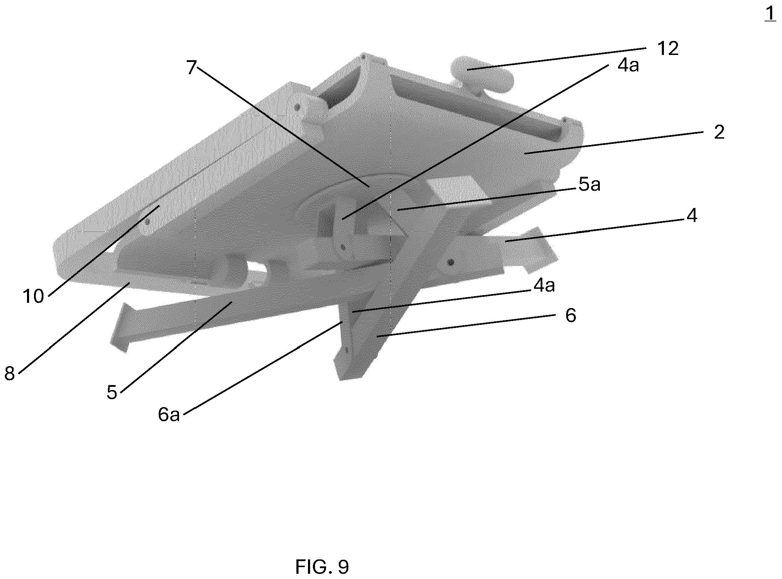

Fig. 9 shows the folded chair seen partly from below,

### Detailed description of the invention

Referring to the Figures the reference numeral 1 shows a hunting chair according to invention in a ready to use position. It comprises a seat 2 and a back rest 3, and three legs 4, 5 and 6. Between the legs (4-6) and the seat 2, a turntable 7 is mounted so that, in use, the seat 2 can turn freely around a generally vertical axis. The reference numeral 8 depicts a gun rest with two articulated side arms 9 and 10 that are pivotably mounted on the side of the seat 2, and a central supporting column 11 with an adjustable length. The central supporting column 11 is at a first end 11a pivotably mounted generally in the center of the gun rest 8 and is at the second end 11b of the supporting column 11 provided with means for releasable fastening onto the front side of the seat 2. In this embodiment the second end 11b comprises an end piece 12 that is rigidly mounted perpendicular to the longitudinal direction of the supporting column 11. The end piece 12 fits releasably into an opening 13 in the side of the seat 2 and will lock in place when inserted in the opening 13 and will be held in place partly due to gravity when in use.

The legs 4, 5 and 6 are articulated in such a way that they will rest on top of one another when in folded position. That is due to the difference in the position of the linkage of each leg. The first leg 4 has a linkage 4a closest to the seat, the second leg 5 has a linkage 5a further away from the seat, and the third leg 6 has a linkage 6a still further away from the seat. Thus, it is the third leg 6 that will be unfolded first, followed by the second leg 5 and the first leg 4, when unfolding the hunting chair. The legs must always be moved in correct order when folding the legs (first 4, then 5 and 6) or unfolding the legs (first 6, then 5 and 4). The legs 4-6 can easily be unfolded and folded when the hunting chair is carried by the hunter in for instance a shoulder strap.

When arriving at the chosen site at the hunting ground, the legs 4-6 can be put in correct position in said order when the chair 1 is still hanging from the shoulder of the hunter in a shoulder strap. Afterwards, the shoulder strap is removed from the shoulder, the chair is placed on the legs, a holding strap that keeps the collapsed chair together is released, and the back rest 3 is moved to a generally vertical position. Subsequently, the hunter moves the gun rest 11 forwards and down and sits down in the seat, whereafter the gun rest is moved up, and the central supporting column is rotated so that it can be placed in the fixing means or opening 13 and can be adjusted to the correct length. The chair 1 is now ready for action. The gun can be placed on the gun rest 8, and the chair 1 with the gun rest 8 can be rotated freely by simple foot action of the hunter. It should be noted that the process can be performed without removing the rifle from the other shoulder.

Reversely, the chair can be put back into collapsed position by first releasing the central supporting column 11 from the opening 13. The gun rest is then rotated to the position on the ground, and the hunter steps out of the chair. Subsequently, the gun rest assembly 8 is collapsed and moved towards the back rest 3, and the back rest 3 and the gun rest assembly 8 is rotated towards the seat 2, and a holding strap can be fastened to hold the collapsed chair together, and finally the legs are collapsed in correct order.

It is also possible, and often advantageous, that the supporting column 11 of the gun rest assembly 8 is moved to a position between the seat 2 and the back rest 3. In this way the folded chair 1 will have a neater and cleaner look, and the risk of the supporting column 11 getting stuck in vegetation or the like is reduced.

Primarily, due to choice of materials and padding, the unfolding and folding of the chair 1 can be performed with hardly any noise.

Generally, the chair can be provided with padding on the seat, back rest and gun rest, and the linkage stops may also be padded, if necessary.

The invention is described in connection with the use of a single shoulder strap, but it can also be used as a backpack type hunting chair with two shoulder straps and possibly a waist strap.

### Reference numerals

- 1.: Collapsible hunting chair
- 2.: Seat
- 3.: Back rest
- 4.: First leg
- 4a.: First leg linkage
- 5.: Second leg
- 5a.: Second leg linkage
- 6.: Third leg
- 6a.: Third leg linkage
- 7.: Turntable
- 8.: Gun rest
- 9.: Side arm
- 10.: Side arm
- 11.: Central supporting column
- 11a.: First end of supporting column
- 11b.: Second end of supporting column
- 12.: End piece
- 13.: Opening in seat

## Claims

1. Collapsible hunting chair (1) comprising a seat (2), a back rest (3), at least three pivotable mounted legs (4, 5 and 6) for resting on a generally horizontal surface when unfolded, a turntable (7) between the seat (2) and the legs (4-6) so that, in use of the unfolded hunting chair (1), the seat (2) can rotate around a generally vertical axis in relation to the legs (4-6), and an adjustable gun rest (8) with two side arms (9, 10) that, when the chair (1) is unfolded and ready to use, is rigidly connected to the seat (2) and can be put in a fixed position in front of a hunter, so as to provide a stable rest for the gun also when the seat (2) is rotated in relation to the legs (4-6).

2. Collapsible hunting chair (1) according to claim 1, wherein the gun rest comprises a central supporting column (11), the length of which can be adjusted.

3. Collapsible hunting chair (1) according to claim 1 or 2, wherein the central supporting column (11) has an end (11a) that is pivotably mounted on the gun rest (8).

4. Collapsible hunting chair (1) according to any of claims 1 to 3, wherein the other end (11b) of the supporting column (11) is provided with means for releasable fastening onto the front side of the seat (2).

5. Collapsible hunting chair (1) according to any of claims 1 to 4, wherein the other end (11b) of the supporting column (11) comprises an end piece (12) that is fixed perpendicular to the supporting column (11).

6. Collapsible hunting chair (1) according to any of claims 1 to 5, wherein the chair is provided with three legs (4, 5 and 6) that comprise an upper part (4a, 5a, 6a) that is rigidly connected to the seat (2), a lower part (4b, 5b, 6b) and a pivot (4c, 5c, 6c).

7. Collapsible hunting chair according to claim 6, wherein the pivots (4c, 5c, 6c) are shifted in relation to one another.

8. Collapsible hunting chair (1) according to claim 1, wherein the side arms (9, 10) are provided with pivots (14) and stops.

9. Collapsible hunting chair (1) according to any of the previous claims, wherein the gun rest can be placed in a stable position on the ground when the chair is unfolded.

10. Collapsible hunting chair (1) according to any of the previous claims, wherein the gun rest can be placed in a stable position behind the back rest when the chair (1) is unfolded.
